# DEMANDE DE BREVET EUROPEEN

(11) **EP 0 757 319 A1**
(43) Date de publication de la demande: **05.02.1997**
(21) Numéro de dépôt: 96410084.6
(22) Date de dépôt: 31.07.1996
(51) Int. Cl.: G06F 13/24

(54) **Dispositif de gestion d'interruptions**

(30) Priorité: 03.08.1995 FR 9509638
(71) Demandeur: SGS-THOMSON MICROELECTRONICS S.A., 94250 Gentilly (FR)
(72) Inventeur: Athenes, Claude, 75013 Paris (FR); Moniot, Pascal, 38920 Crolles (FR)
(74) Mandataire: de Beaumont, Michel

(57) **Abrégé**

L'invention concerne un dispositif (3) de gestion d'interruptions d'un microprocesseur (1) à partir d'événements apparaissant sur au moins une entité (U) associée à ce microprocesseur (1), dispositif qui comporte des moyens (4, 6, 7, 8) pour organiser la mémorisation de mots représentatifs au moins de l'origine et de la nature des interruptions émises par ladite entité (U).

## Description

La présente invention concerne un dispositif de gestion d'interruptions générées par différentes entités associées à un microprocesseur.

Classiquement, un microprocesseur comprend un certain nombre d'entrées destinées à recevoir des signaux d'interruptions émanant de différentes entités. Ces signaux sont chargés d'avertir le microprocesseur de l'apparition d'un événement particulier au sein des entités.

La gestion classique d'interruptions passe par un traitement en temps réel de ces événements particuliers. En d'autres termes, dès qu'un événement apparaît au niveau d'une entité, le programme exécuté par le microprocesseur est immédiatement interrompu pour traiter cet événement en exécutant un sous-programme qui lui est associé. Un tel fonctionnement en temps réel est nécessaire pour éviter qu'un événement apparu au sein d'une entité n'ait pas été pris en compte par le microprocesseur lorsque apparaît un autre événement au sein de cette entité.

Un inconvénient des systèmes classiques est que la gestion en temps réel des interruptions nécessite de prévoir un microprocesseur très rapide même si une telle rapidité n'est nullement nécessaire pour le traitement des programmes associés au fonctionnement du système.

Un autre inconvénient est que l'on ne peut éviter, en raison de l'enchaînement des interruptions, qu'une interruption d'un type donné apparaisse alors même que le traitement d'une interruption précédente de même type (faisant appel au même sous-programme) n'est pas terminé pour avoir été interrompu à l'apparition d'autres événements. Le traitement de cette interruption précédente ne pourra donc pas être terminé ce qui peut provoquer une erreur de fonctionnement.

La présente invention vise à pallier ces inconvénients en proposant un dispositif de gestion d'interruptions qui permette au microprocesseur de traiter les interruptions en temps différé.

L'invention vise également à proposer un dispositif au moyen duquel aucun événement n'échappe au microprocesseur.

L'invention vise en outre à permettre une modification du rang de priorité associé à chaque entité présentant une interruption sans qu'il soit nécessaire d'intervenir sur les connexions des différents éléments du système.

Pour atteindre ces objets, la présente invention prévoit un dispositif de gestion d'interruptions d'un microprocesseur à partir d'événements apparaissant sur au moins une entité associée à ce microprocesseur, dispositif qui comporte des moyens pour organiser la mémorisation de mots représentatifs au moins de l'origine et de la nature des interruptions émises par ladite entité.

Selon un mode de réalisation de la présente invention, lesdits mots sont mémorisés dans au moins une zone d'une mémoire vive qui leur est réservée, lesdits moyens comportant un premier registre contenant l'adresse du premier mot de ladite zone et un circuit logique de calcul de l'adresse de la zone de la mémoire à laquelle ce mot doit être mémorisé.

Selon un mode de réalisation de la présente invention, la mémorisation desdits mots dans ladite zone de la mémoire s'effectue de manière circulante, chaque mot comprenant un bit, indicateur de l'existence d'une interruption à traiter et, positionné dans un état actif lors de la mémorisation du mot.

Selon un mode de réalisation de la présente invention, ledit bit indicateur de l'existence d'une interruption à traiter dans le mot qui le contient est positionné dans un état inactif par ledit microprocesseur lorsqu'il effectue une lecture de ce mot, ledit bit indicateur de l'existence d'une interruption à traiter permettant, en outre, de déterminer la saturation éventuelle de ladite zone de la mémoire.

Selon un mode de réalisation de la présente invention, le dispositif comporte au moins un registre à accumulation recevant lesdits mots de ladite entité et les délivrant audit circuit logique de calcul d'adresses.

Selon un mode de réalisation de la présente invention, le dispositif est destiné à gérer des interruptions émises par plusieurs entités, chaque entité étant associée à une zone de la mémoire et le dispositif comportant un deuxième registre contenant, pour chaque zone, un code indicateur de sa taille.

Selon un mode de réalisation de la présente invention, le dispositif est associé à un registre d'interruptions destiné à être lu par ledit microprocesseur, ledit registre d'interruptions étant d'un nombre de bits au moins égal au nombre de zones de la mémoire, chaque bit indiquant par son état, respectivement actif ou inactif, la présence ou l'absence d'une interruption mémorisée dans la zone qui lui est associée, le positionnement d'un bit dans son état actif étant effectué par ledit circuit de calcul d'adresses et un positionnement de tous les bits dans leur état inactif étant effectué, par le microprocesseur, à chaque lecture.

Selon un mode de réalisation de la présente invention, ledit registre d'interruptions est associé à un registre de masque de même taille dont les bits sont positionnés par le microprocesseur et à un circuit de génération d'un signal envoyé au microprocesseur, ledit signal indiquant la présence d'une interruption qui n'est pas masquée.

Selon un mode de réalisation de la présente invention, ledit registre d'interruptions contient, en outre, au moins des bits indicateurs d'interruptions générées par ledit circuit logique de calcul d'adresses, au moins un de ces bits indiquant la saturation d'une zone de ladite mémoire.

Selon un mode de réalisation de la présente invention, ledit microprocesseur détermine la priorité de traitement des interruptions contenues dans une zone de la mémoire par rapport à celles contenues dans une autre zone.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 représente, sous forme de schéma-blocs, un mode de réalisation d'un dispositif de gestion d'interruptions selon l'invention ; et
la figure 2 représente un mode de réalisation d'une partition d'une mémoire vive associée à un dispositif tel que représenté à la figure 1.

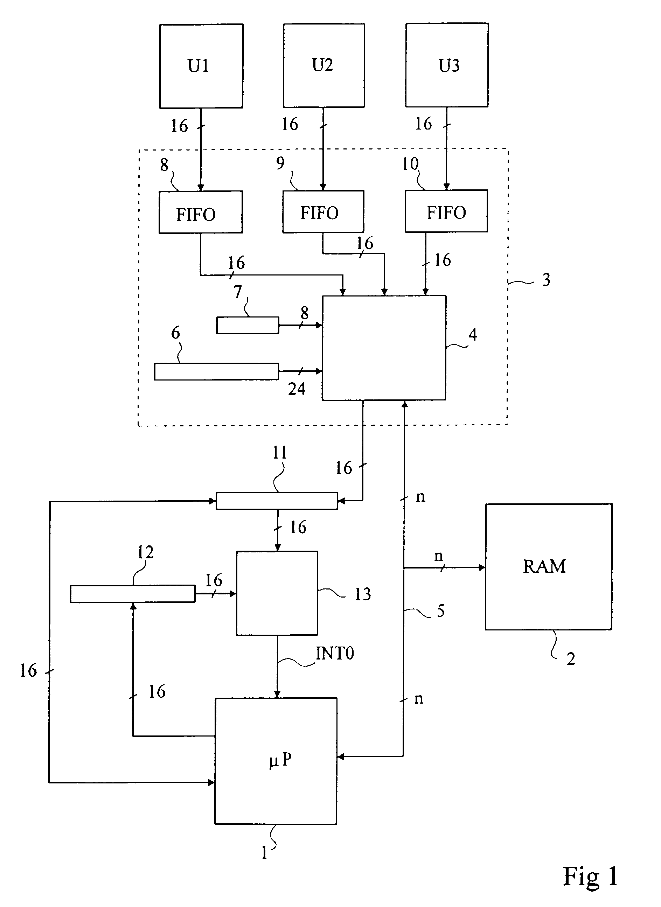

Pour des raisons de clarté, seuls les éléments et liaisons nécessaires à l'exposé de l'invention ont été représentés à la figure 1.

Une caractéristique de la présente invention est d'organiser une mémorisation des événements qui apparaissent sur différentes entités U associées à un microprocesseur 1 et de permettre au microprocesseur 1 d'extraire ces événements d'une mémoire vive (RAM) 2 lorsqu'il est disponible pour traiter une ou plusieurs interruptions. Ainsi, un événement qui apparaît sur une entité U donnée ne risque plus de provoquer l'interruption du traitement de l'événement précédent, que ce dernier provienne, ou non, de cette entité. On élimine donc le risque qu'un événement ultérieur vienne interrompre le traitement d'une interruption précédente de même type, émise par une même entité, supprimant ainsi les risques d'erreurs de fonctionnement.

Un dispositif 3 de gestion d'interruptions selon l'invention comporte essentiellement un circuit logique 4 de calcul d'adresses et de génération d'un mot permettant au moins de définir l'événement ayant provoqué l'émission d'une interruption par une entité. A la figure 1, trois entités, respectivement U₁, U₂ et U₃ ont été représentées.

De préférence, la mémoire vive 2 correspond à la mémoire vive associée au système dans lequel est implanté le dispositif selon l'invention. Cette mémoire 2 est donc commune au microprocesseur 1 et aux différents éléments du système. Elle est reliée au circuit logique 4 du dispositif 3 ainsi qu'au microprocesseur 1 au moyen d'un bus 5. Le nombre n de bits de ce bus 5 dépend de la taille de la mémoire 2. Le bus 5 est, en pratique, constitué d'un bus d'adresse, d'un bus de données et d'une liaison indiquant si la tâche à effectuer dans la mémoire 2 est une lecture ou une écriture.

A l'apparition d'un événement justifiant une interruption, une entité U₁, U₂ ou U₃ émet vers le dispositif de gestion d'interruptions 3 un mot, par exemple de seize bits, définissant au moins l'origine et le motif de l'interruption.

Le rôle du dispositif 3 selon l'invention est alors d'organiser la mémorisation de ce mot dans la mémoire vive 2.

Pour ce faire, le circuit 4 du dispositif 3 détermine l'adresse de la mémoire 2 dans laquelle le mot doit être stocké. Il se comporte à ce titre comme un dispositif de commande d'accès mémoire direct (contrôleur DMA).

Selon l'invention, une zone A de la mémoire vive 2 est affectée à la mémorisation des interruptions. Le circuit 4 est associé à un premier registre 6 contenant l'adresse du premier mot W de cette zone A. La taille du registre 6 est fonction de la taille de la mémoire 2, elle est par exemple de vingt-quatre bits pour une mémoire 2 de seize mégamots de seize bits.

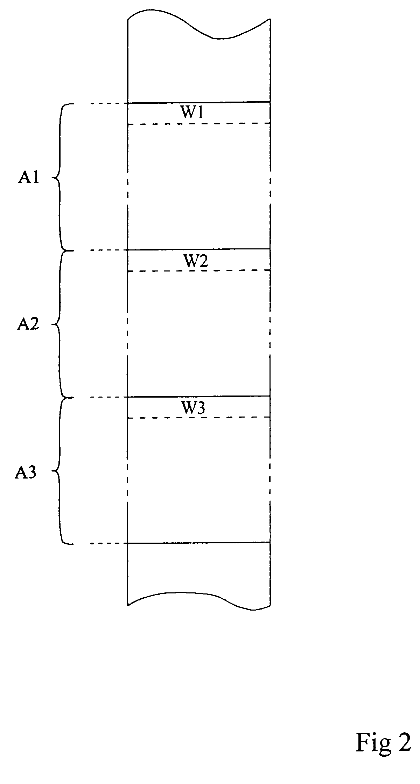

De préférence et comme l'illustre la figure 2, plusieurs zones successives A sont affectées à la mémorisation des interruptions, chaque zone étant associée à une entité U. Cela facilite, comme on le verra par la suite, le traitement des interruptions selon un rang de priorité qui est associé à chaque entité U. Le cas échéant, par exemple si deux (ou plusieurs) entités U ont un fonctionnement lié, une même zone A est affectée à ces entités U tandis que les autres entités se voient affecter leur propre zone. Selon l'invention, on considère qu'une entité U peut aussi bien être constituée par une entité physique (par exemple un périphérique donné) que par une entité fonctionnelle d'une entité physique en comportant plusieurs.

Dans l'exemple représenté aux figures 1 et 2, on considère que chaque entité, respectivement U₁, U₂ et U₃, est affectée à une zone, respectivement A₁, A₂ et A₃ (figure 2), de la mémoire 2.

Un avantage de l'emploi de plusieurs zones A est que cela évite de devoir coder, dans le mot stocké en mémoire 2, l'entité U qui est à l'origine de l'interruption. Lorsqu'une même zone A est partagée entre plusieurs entités U, le nombre de ces entités est, de préférence, faible (par exemple deux) pour permettre le codage de l'entité émettrice de l'interruption sur un nombre faible de bits (par exemple un).

La mémorisation des interruptions successives émises par une entité U donnée dans la zone A qui lui est affectée s'effectue de manière circulaire dans cette zone. En d'autres termes, le premier mot W de la zone A est rempli à l'apparition d'une première interruption, le deuxième mot à l'apparition de la deuxième interruption et ainsi de suite. Lorsque la fin de la zone A est atteinte, le dispositif 3 mémorise l'interruption suivante, de nouveau, dans le premier mot W de cette zone A.

La limite de fonctionnement sans perte d'événement du dispositif 3 selon l'invention est donc liée à la taille de la zone A. En effet, si le microprocesseur 1 n'a pas traité d'interruption dans une zone A pendant une longue période et qu'un nouvel événement apparaît alors que la zone A est pleine, c'est-à-dire que son premier mot W n'a pas encore été lu par le microprocesseur 1, cela risque de provoquer une perte d'événement. La taille d'une zone A de la mémoire 2 est donc dimensionnée, selon l'invention, en fonction de la fréquence attendue d'émission d'interruptions par la ou les entités U auxquelles cette zone est associée et de la vitesse de traitement du microprocesseur 1. Comme on le verra par la suite, l'invention permet d'éviter toute perte d'événement même lorsque la zone A devient pleine.

Pour déterminer si la position à laquelle le dispositif 3 souhaite mémoriser un nouveau mot dans une zone A donnée est libre, chaque mot comprend un bit NS qui indique la présence, à cette adresse, d'un mot correspondant à une interruption. Ce bit NS est ajouté par le dispositif 3, l'état des autres bits du mot étant généré directement par l'entité U qui a émis l'interruption. En d'autres termes, le dispositif 3 ajoute un bit au mot qu'il reçoit d'une entité U. Lorsqu'il écrit un mot dans la mémoire 2, le dispositif 3 positionne ce bit dans un état actif, par exemple "1", qui indique que l'adresse correspondante contient une interruption à traiter. Le bit NS est, par exemple, le bit de poids fort. Ce bit NS est désactivé, par exemple positionné à l'état "0", par le microprocesseur 1 lorsqu'il lit le mot correspondant pour traiter l'interruption. Le circuit 4 ajoute, le cas échéant, également un bit indicateur de l'entité U qui est à l'origine de l'interruption lorsqu'une même zone A de la mémoire est partagée par plusieurs entités U.

Un avantage de l'organisation circulante de l'écriture dans chacune des zones A et de l'emploi du bit NS est que cela permet au dispositif 3 de déterminer, par l'examen du contenu du bit NS à l'adresse d'un nouveau mot qu'il souhaite écrire, si la zone A considérée est pleine ou non. Ainsi et comme on le verra par la suite, le dispositif de gestion d'interruptions selon l'invention peut être, non seulement paramétré, mais également adapté automatiquement en cours de fonctionnement pour éviter toute perte d'événement.

Le contenu d'un mot dépend de l'entité U dont est issue l'interruption. En effet, un mot doit contenir toutes les indications permettant au microprocesseur 1 de traiter l'interruption lorsqu'il lit ce mot. Le cas échéant, un mot peut contenir pour certaines entités U, non seulement l'origine et la nature de l'événement, mais également la donnée elle-même qui a provoqué cet événement.

Dans l'exemple représenté à la figure 2 où plusieurs zones A de la mémoire vive 2 sont affectées au dispositif de gestion d'interruptions 3, ces zones A₁, A₂ et A₃ sont, de préférence, à la suite les unes des autres. Cela permet au dispositif 3 qui contient l'adresse du premier mot W₁ d'une première zone A₁ dans le registre 6, de déterminer aisément l'adresse des premiers mots, respectivement W₂ et W₃, des autres zones A₂ et A₃ à partir de la taille de chaque zone contenue dans un deuxième registre 7 qui lui est associé.

Lorsque le dispositif 3 doit mémoriser une interruption dans une autre zone que la première zone A₁, le circuit 4 calcule, à partir de la taille des zones contenue dans le registre 7, l'adresse du premier mot W₂ ou W₃ de cette autre zone, respectivement A₂ ou A₃. La taille d'une zone est, de préférence, codée sous la forme d'un multiple de groupes de mots mémoire pour limiter la taille du registre 7. Ainsi, en utilisant par exemple un registre 7 de huit bits et en affectant trois bits à la zone A₁, trois bits à la zone A₂ et deux bits à la zone A₃, on peut prévoir que les zones A₁ et A₂ puissent être dimensionnées jusqu'à huit fois m mots, soit huit groupes de m mots, et que la zone A₃ puisse être dimensionnée jusqu'à quatre fois m mots. Le nombre m correspond à une puissance de deux. Ainsi, m indique le poids du bit d'adresse à partir duquel le code contenu dans le registre 7 doit être ajouté à l'adresse du mot W₁.

Un avantage de l'emploi du registre 7 est qu'un même dispositif 3 selon l'invention peut être paramétré en fonction du système auquel il est associé et dont il doit gérer les interruptions.

Bien entendu, la taille du registre 7 est fonction du nombre de zones maximales pour lequel est prévu le dispositif 3. Le cas échéant, la taille d'un groupe de mots peut être différente pour chaque zone A. Le circuit 4 comporte alors des moyens pour effectuer un calcul différent en fonction de la zone A à laquelle se rapporte le code du registre 7. Comme le circuit 4 identifie, en fonction de la position des bits dans le registre 7, la zone A à laquelle correspond le code qu'il traite, ces moyens peuvent être simplement réalisés en affectant, à chaque code, un poids différent lors de la sommation avec l'adresse du mot W₁.

A titre d'exemple particulier de réalisation, en codant la taille par groupes de cent vingt-huit mots pour les zones A₁ et A₂ et par groupes de soixante-quatre mots pour la zone A₃, un registre 7 de huit bits permet de dimensionner les zones A₁ et A₂ de zéro à mille vingt-quatre mots par pas de cent vingt-huit et la zone A₃ de zéro à deux cents cinquante-six mots par pas de soixante-quatre.

L'identification, par le dispositif 3, de l'entité U qui émet une interruption est effectuée par l'adresse physique de cette interruption, c'est-à-dire par les bornes du dispositif 3 sur lesquelles arrive cette interruption.

Ainsi, le circuit 4 peut déterminer, à l'arrivée d'une interruption, la zone A dans laquelle cette interruption doit être stockée et, si plusieurs entités U partagent une même zone A, le code d'identification à ajouter au mot mémorisé.

De préférence et comme cela est représenté à la figure 1, le circuit 4 reçoit les interruptions émises par les entités U₁, U₂ et U₃ par l'intermédiaire de registres à accumulation (FIFO), respectivement 8, 9 et 10. Cela permet de s'assurer que toutes les interruptions sont mémorisées. En effet, le bus 5 peut être occupé à l'apparition d'une interruption et le dispositif 3 doit, dans ce cas, attendre avant de pouvoir mémoriser cette interruption.

Le nombre de lignes des registres 8, 9 et 10 est fonction, notamment, de l'occupation attendue du bus 5 et de la fréquence attendue des interruptions provenant de leur entité respective U₁, U₂ et U₃. Ce nombre de lignes est également fonction du rang de priorité d'accès au bus 5 qui est associé au dispositif 3. En effet, bien que cela n'ait pas été représenté, d'autres éléments du système ont accès à la mémoire 2, par exemple certaines entités U, et le système est généralement associé à un dispositif de gestion des priorités d'accès au bus 5 entre ces différents éléments. Plus le dispositif 3 dispose d'un rang de priorité élevé, plus le nombre de lignes des registres 8, 9 et 10 peut être faible pour une même fréquence d'apparition des interruptions.

La lecture des interruptions par le microprocesseur 1 s'effectue en respectant, au moins par zone A, l'ordre dans lequel ces interruptions ont été mémorisées.

Pour ce faire, le microprocesseur 1 stocke, par exemple dans un registre ou dans la mémoire 2, l'adresse de la dernière interruption qu'il a traitée de chaque zone A. Ainsi, lorsque le microprocesseur 1 traite les interruptions d'une zone A donnée, il peut lire directement la première interruption qu'il n'a pas traitée et s'arrêter dès qu'il rencontre un mot dont le bit NS est à l'état "0", auquel cas toutes les interruptions de cette zone A ont alors été traitées.

Selon un premier mode de réalisation non représenté, le traitement des interruptions par le microprocesseur 1 s'effectue par scrutation des zones correspondantes de la mémoire 2. Le microprocesseur 1 gère donc, seul, les moments où il souhaite traiter des interruptions. Le microprocesseur 1 lit alors, par exemple séquentiellement, chaque zone A de la mémoire 2 à partir de l'adresse suivante de celle de la dernière interruption traitée de cette zone A. Il passe à la zone A suivante dès qu'il rencontre un mot dont le bit NS est à l'état "0" et mémorise l'adresse de la dernière interruption traitée qui correspond à l'adresse précédant celle du mot dont le bit NS est à l'état "0". Un tel mode de réalisation est, par exemple, utilisé lorsque le dispositif 3 est prévu pour un système dans lequel une seule entité U génère des interruptions. Un tel mode de réalisation peut également être utilisé, par exemple, lorsque les interruptions n'ont pas besoin d'être traitées selon un rang de priorité entre différentes entités U. De préférence, toutes les interruptions sont cependant, dans ce cas, mémorisées dans une même zone A de la mémoire 2.

Selon un deuxième mode de réalisation tel que représenté à la figure 1, le microprocesseur 1 passe dans son programme de traitement des interruptions sous commande d'un signal INTO qui lui indique la présence d'au moins une interruption.

Le fonctionnement d'un tel mode de réalisation passe par l'emploi classique d'un registre d'interruptions 11, d'un registre de masque 12 et d'un circuit 13 de génération du signal INTO. Le registre de masque 12 présente la même taille que le registre d'interruptions 11.

Par contre et selon l'invention, les bits du registre 11 sont positionnés par le dispositif 3. Le registre 11 comprend au moins un bit par zone A de la mémoire 2. Ce bit est positionné dans un état actif, par exemple "1", lorsqu'une interruption a été mémorisée dans cette zone A. Ainsi, la lecture du registre 11 permet au microprocesseur 1 d'identifier celles des zones A qui contiennent des interruptions à traiter sans qu'il soit nécessaire d'explorer les zones A qui sont vides.

Le registre 11 contient, de préférence, également des bits indicateurs d'événements particuliers qui sont liés au fonctionnement du système et dont une mémorisation dans la mémoire 2 n'est pas nécessaire. Il s'agit, par exemple et entre autres, de trois bits qui indiquent l'état plein ou non de chaque zone A₁, A₂ et A₃ de la mémoire 2. Il peut s'agir également de bits indicateurs de la présence d'événements sur d'autres éléments du système mais qui n'ont pas besoin d'être mémorisés, par exemple, sur un élément qui, lorsqu'il génère une interruption, attend que cette interruption soit traitée pour reprendre son fonctionnement et être en mesure d'en générer une nouvelle. Dans ce cas et bien que cela n'ait pas été représenté, le dispositif 3 reçoit des signaux de ces éléments lui permettant de positionner ces bits.

Un avantage de la présente invention est que tous les événements se produisant dans le système restent à disposition du microprocesseur 1. Lorsque le microprocesseur 1 examine le contenu du registre 11, il est sûr de pouvoir déduire tout ce qui s'est passé dans le système depuis son examen précédent du registre 11.

Même si une des zones A de la mémoire 2 devient pleine, le microprocesseur 1 en est informé sans qu'il soit forcément nécessaire de l'interrompre immédiatement, cette information étant contenue dans le registre 11. Ainsi, le microprocesseur 1 est en mesure, en fonction du sous-programme associé à une interruption de ce type, de donner une suite à un tel événement même si cela n'est pas en temps réel. Bien entendu, on préférera généralement que le microprocesseur 1 soit immédiatement informé qu'une des zones A est saturée pour être en mesure d'intervenir immédiatement afin d'éviter un blocage du système.

Comme l'écriture par le dispositif 3 dans une zone A donnée est circulaire et que le microprocesseur 1 lit les mots contenus dans cette zone dans l'ordre de leur mémorisation, le bit NS permet au dispositif 3 de déterminer, par l'examen de ce bit NS à l'adresse où il souhaite écrire un nouveau mot, si la zone A considérée est pleine ou non. En effet, si ce bit NS est à l'état "1", cela signifie que toute la zone est pleine. Le dispositif 3 est alors en mesure de générer une interruption, de préférence, prioritaire à l'attention du microprocesseur 1.

Les bits du registre de masque 12 sont positionnés par le microprocesseur 1. Le circuit 13 correspond, par exemple et de manière classique, à une combinaison ET entre deux bits de même poids provenant des registres 11 et 12, les résultats des différentes combinaisons ET étant combinés par un OU logique dont le résultat correspond au signal INT0.

Le signal INT0 change donc d'état lorsqu'un bit du registre 11 qui n'est pas masqué par le bit de même poids du registre 12 passe à l'état "1" ou lorsqu'un bit du registre 11 qui est à l'état "1" cesse d'être masqué par le bit de même poids du registre 12. Le microprocesseur 1 examine alors le contenu du registre 11 et traite la ou les interruptions.

Les bits du registre 11 sont remis à l'état "0" par le microprocesseur 1 en même temps qu'il les lit.

Un avantage de la présente invention est que le microprocesseur 1 peut, si des interruptions générées par plusieurs entités U sont présentes, traiter ces interruptions selon un rang de priorité déterminé par son programme de traitement d'interruptions. Le rang de priorité est ainsi, selon l'invention, modifiable sans qu'il soit nécessaire d'intervenir sur les connexions des différents éléments du système.

Un autre avantage de la présente invention est que le microprocesseur 1 peut désormais utiliser le registre de masque 12 pour interdire le traitement d'une interruption donnée alors qu'une autre interruption est en cours de traitement. Il suffit pour cela que le microprocesseur masque, au moyen du registre 12, tous les bits du registre 11 dès qu'il les a examinés. Un tel fonctionnement n'est pas possible dans les systèmes classiques. En effet, en masquant des bits correspondant à des entités qui sont susceptibles d'émettre des interruptions alors même qu'une de leurs interruptions précédentes n'a pas été traitée, les interruptions suivantes seraient perdues.

Le cas échéant, on pourra cependant prévoir que certains bits, à l'exception des bits correspondant aux zones de la mémoire 2, ne soient jamais masqués pour provoquer, dans certains cas, une interruption immédiate du microprocesseur 1. Par exemple, on peut prévoir que les bits qui correspondent aux interruptions générées par le dispositif 3 pour indiquer une saturation des zones A de la mémoire 2 ne soient jamais masqués. Ainsi, dès qu'une zone A devient pleine, le microprocesseur 1 peut être conduit à traiter les interruptions de cette zone A, la priorité pouvant lui être donnée par le programme lorsqu'un de ces bits est à l'état "1". On pourrait alors prévoir que le nombre de lignes des registres 8, 9 et 10 soit choisi pour éviter, dans un tel cas, que des événements soient perdus.

Un avantage de la présente invention est que l'on peut également prévoir que le microprocesseur augmente automatiquement la taille de la zone mémoire considérée pour éviter toute perte d'information. Le choix entre une augmentation de la taille de la zone mémoire et un traitement immédiat et prioritaire des interruptions que contient cette zone à l'apparition d'une interruption d'indication de saturation de cette zone est, selon l'invention, laissée au choix de l'utilisateur en fonction de l'application à laquelle est destiné le dispositif selon l'invention.

Bien entendu, la présente invention est susceptible de diverses variantes et modifications qui apparaîtront à l'homme de l'art. En particulier, chacun des composants décrits pourra être remplacé par un ou plusieurs éléments remplissant la même fonction. De plus, la réalisation pratique des circuits logiques auxquels il a été fait référence dans la description qui précède est à la portée de l'homme du métier en fonction du système auquel le dispositif est destiné et des indications fonctionnelles données à titre d'exemple. En outre, les tailles des registres données à titre d'exemple particulier pourront être modifiées en fonction du système auquel est destiné le dispositif selon l'invention, en particulier, du nombre d'entités dont on souhaite mémoriser les interruptions.

## Revendications

1. Dispositif (3) de gestion d'interruptions d'un microprocesseur (1) à partir d'événements apparaissant sur au moins une entité (U) associée à ce microprocesseur (1), caractérisé en ce qu'il comporte des moyens (4, 6, 7, 8) pour organiser la mémorisation de mots représentatifs au moins de l'origine et de la nature des interruptions émises par ladite entité (U).

2. Dispositif de gestion d'interruptions selon la revendication 1, caractérisé en ce que lesdits mots sont mémorisés dans au moins une zone (A) d'une mémoire vive (2) qui leur est réservée, lesdits moyens comportant un premier registre (6) contenant l'adresse du premier mot (W) de ladite zone (A) et un circuit logique (4) de calcul de l'adresse de la zone (A) de la mémoire (2) à laquelle ce mot doit être mémorisé.

3. Dispositif de gestion d'interruptions selon la revendication 2, caractérisé en ce que la mémorisation desdits mots dans ladite zone (A) de la mémoire (2) s'effectue de manière circulante, chaque mot comprenant un bit (NS), indicateur de l'existence d'une interruption à traiter et, positionné dans un état actif ("1") lors de la mémorisation du mot.

4. Dispositif de gestion d'interruptions selon la revendication 3, caractérisé en ce que ledit bit (NS) indicateur de l'existence d'une interruption à traiter dans le mot qui le contient est positionné dans un état inactif ("0") par ledit microprocesseur (1) lorsqu'il effectue une lecture de ce mot, ledit bit (NS) indicateur de l'existence d'une interruption à traiter permettant, en outre, de déterminer la saturation éventuelle de ladite zone (A) de la mémoire (2).

5. Dispositif de gestion d'interruptions selon l'une quelconque des revendications 2 à 4, caractérisé en ce qu'il comporte au moins un registre à accumulation (8, 9, 10) recevant lesdits mots de ladite entité (U) et les délivrant audit circuit logique de calcul d'adresses (4).

6. Dispositif de gestion d'interruptions selon l'une quelconque des revendications 2 à 5, caractérisé en ce qu'il est destiné à gérer des interruptions émises par plusieurs entités (U₁, U₂, U₃), chaque entité étant associée à une zone (A₁, A₂, A₃) de la mémoire (2) et le dispositif comportant un deuxième registre (7) contenant, pour chaque zone (A₁, A₂, A₃), un code indicateur de sa taille.

7. Dispositif de gestion d'interruptions selon l'une quelconque des revendications 2 à 6, caractérisé en ce qu'il est associé à un registre d'interruptions (11) destiné à être lu par ledit microprocesseur (1), ledit registre d'interruptions (11) étant d'un nombre de bits au moins égal au nombre de zones (A₁, A₂, A₃) de la mémoire (2), chaque bit indiquant par son état, respectivement actif ("1") ou inactif ("0"), la présence ou l'absence d'une interruption mémorisée dans la zone (A₁, A₂, A₃) qui lui est associée, le positionnement d'un bit dans son état actif ("1") étant effectué par ledit circuit de calcul d'adresses (4) et un positionnement de tous les bits dans leur état inactif ("0") étant effectué, par le microprocesseur (1), à chaque lecture.

8. Dispositif de gestion d'interruptions selon la revendication 7, caractérisé en ce que ledit registre d'interruptions (11) est associé à un registre de masque (12) de même taille dont les bits sont positionnés par le microprocesseur (1) et à un circuit (13) de génération d'un signal (INT0) envoyé au microprocesseur (1), ledit signal (INT0) indiquant la présence d'une interruption qui n'est pas masquée.

9. Dispositif de gestion d'interruptions selon la revendication 7 ou 8, caractérisé en ce que ledit registre d'interruptions (11) contient, en outre, au moins des bits indicateurs d'interruptions générées par ledit circuit logique de calcul d'adresses (4), au moins un de ces bits indiquant la saturation d'une zone (A) de ladite mémoire (2).

10. Dispositif de gestion d'interruptions selon l'une quelconque des revendications 6 à 9, caractérisé en ce que ledit microprocesseur (1) détermine la priorité de traitement des interruptions contenues dans une zone (A₁, A₂, A₃) de la mémoire (2) par rapport à celles contenues dans une autre zone (A₁, A₂, A₃).
